# EUROPÄISCHE PATENTANMELDUNG

(11) **EP 3 988 761 A1**
(43) Veröffentlichungstag der Anmeldung: **27.04.2022**
(21) Anmeldenummer: 20203338.7
(22) Anmeldetag: 22.10.2020
(51) Int. Cl.: E21B 47/009

(54) **VERFAHREN, ANALYSEVORRICHTUNG UND PUMPSYSTEM ZUR ERKENNUNG EINES ÖLAUSTRITTS BEI EINER GESTÄNGE-TIEFPUMPE**

(71) Anmelder: Siemens Energy Global GmbH & Co. KG, 81739 München (DE)
(72) Erfinder: Die Erfindernennung liegt noch nicht vor

(57) **Zusammenfassung**

Computer-implementiertes Verfahren zur Erkennung eines Ölaustritts bei einer Gestänge-Tiefpumpe, wobei während einer Pumpbewegung des Gestänges (5, 10) durch den Bohrlochkopf (6) ein Hub-Bereich gebildet wird, welcher von einer Kamera (22) durch eine Bild-Sequenz erfasst wird, und folgende Verfahrensschritte ausgeführt werden:
a) Erfassen von Bildern der Bild-Sequenz mit zumindest dem Hub-Bereich des Gestänges,
b) Erkennen einer Verschmutzung im Hub-Bereich des Gestänges gegenüber einem bekannten sauberen Zustand für ein jeweiliges Bild der Bild-Sequenz,
c) Ermitteln der Lage der erkannten Verschmutzung für ein jeweiliges Bild der Bild-Sequenz mithilfe der jeweiligen Position des Gestänges,
d) Bestimmen der Veränderung der Verschmutzung an der ermittelten Lage über zumindest einen Pumpzyklus aus den Bildern der Bild-Sequenz,
e) Prüfen, ob die Veränderung der Verschmutzung einen vorbestimmten Grenzwert überschreitet, und falls zutreffend, Ausgeben einer Warnung eines Ölaustritts.

## Beschreibung

Die Erfindung betrifft ein computer-implementiertes Verfahren, eine Analysevorrichtung und ein Pumpsystem zur Erkennung eines Ölaustritts bei einer Gestänge-Tiefpumpe, wobei die Pumpe einen Pump-Kopf aufweist, welcher über ein Gestänge mit einem Kinematik-Wandler verbunden ist, und der Kinematik-Wandler im Betrieb von einem Motor angetrieben wird, und das Gestänge in einen im Boden befindlichen Bohrlochkopf eintaucht.

Tiefpumpen werden als Fördereinrichtungen zur Gewinnung von unterirdisch lagernden Flüssigkeiten eingesetzt, wenn der Lagerstättendruck nicht ausreicht, dass sie selbständig bzw. in ausreichender Menge an die Oberfläche gelangen. Zumeist wird mit ihnen Erdöl gefördert. Weitere Einsatzgebiete sind die Förderung von Sole und Heilwässern.

Das Bild der meisten Ölfelder wird von Gestänge-Tiefpumpen geprägt, die wegen ihres Aussehens und ihrer Bewegung auch Pferdekopfpumpen, Nickesel oder Nicker genannt werden. Dabei befindet sich der eigentliche Pumpmechanismus - ein Kolben mit Rückschlagventilen - in einem eigenen Rohrstrang im Bohrloch nahe der ölführenden Schicht. Der Kolben wird mittels einer verschraubbaren Stange von einem an der Erdoberfläche befindlichen Pumpenbock in eine kontinuierliche Auf- und Abwärtsbewegung versetzt.

Dies wird durch den sogenannten Pferdekopf bewerkstelligt. Dieser besteht aus einem am Ende eines als Balancier angeordneten Kreisbogensegments, an dem ein Stahlseil- oder Kettenpaar oben angeklemmt ist.

Der Antrieb erfolgt zumeist elektrisch. Beim Vorhandensein von ausreichend im Erdöl gelösten energiehaltigen Gasen kann jedoch ein Teil dieser Gase an Ort und Stelle mittels eines Degasers vom Fördergut abgetrennt und einem Gasmotor, der die Pumpe antreibt, zugeführt werden.

Je nach Pumpenbauart und -größe beträgt der Arbeitshub 1 bis 5 m. Pro Minute sind zweieinhalb bis zwölf Hübe üblich. Die Gestänge-Tiefpumpe kann bis zu Fördertiefen von etwa 2500 m wirtschaftlich eingesetzt werden. Für größere Tiefen sind aufgrund des großen Gewichts der zu hebenden Flüssigkeitssäule andere Pumpensysteme besser geeignet.

Der Pumpentyp "Mark II" des texanischen Herstellers Lufkin Industries eignet sich durch seine spezielle Bewegungsgeometrie besonders für hohe Förderraten aus großen Tiefen.

Der Pumpentyp "Sucker Rod" weist eine Saugstange auf, das heißt eine Stahlstange mit einer typischen Länge zwischen 25 und 30 Fuß und einem Gewinde an beiden Enden, die in der Ölindustrie verwendet wird, um die Oberflächen- und Bohrlochkomponenten einer in einer Ölquelle installierten Hubkolbenpumpe miteinander zu verbinden.

Gestänge-Tiefpumpen kommen bei der Gewinnung von Erdöl in Lagerstätten zum Einsatz, in welchen der Druck nicht zur Eruptivförderung ausreicht. Der Pumpenmechanismus besteht im Grunde unterirdisch aus einem Kolben mit Rückschlagventilen an einem Rohrstrang, oberirdisch wird dieser von einem Pumpenbock in eine Auf- und Abwärtsbewegung versetzt.

Die sogenannte Stopfbuchse gewährleistet einen dichten Abschluss um das Pumpgestänge.

Durch die ständige Bewegung kann sich diese mit der Zeit lockern oder verschleißen, was zu Ölaustritt und damit verbundener Kontamination des umliegenden Erdbodens führen kann.

Durch unmittelbare Feststellung von beginnendem Ölaustritt kann der entstehende Schaden minimiert werden.

Im Stand der Technik gibt es einerseits Ansätze zur Verminderung der Auftrittswahrscheinlichkeit eines Öllecks, und andererseits Arbeiten zur Minimierung des entstandenen Schadens im Störfall.

So wurden beispielsweise spezielle Stopfbuchsen entwickelt, die sich mittels Federn automatisch nachziehen.
Jedoch sind derartige mechanische Lösungen oft nicht zuverlässig genug und die Wirkung kann sich über das Alter der Anlage verschlechtern.

Die Auswirkungen eines Öllecks können beispielsweise mit speziellen Auffangbehältern oder geeigneten Betonfundamenten verringert werden.

Zusätzlich werden daher die Anlagen manuell durch regelmäßige Kontrollgänge überprüft.

Systeme zur automatischen Erkennung von Ölleckagen sind ebenso aus dem Stand der Technik bekannt, wie beispielsweise mit Sensorik ausgestattete Gefäße, die austretende Flüssigkeit sammeln und einen Alarm auslösen.

Es ist Aufgabe der Erfindung ein Verfahren und eine Vorrichtung bereitzustellen, welche eine genauere, rasche und zuverlässige, automatische Erkennung eines Ölaustritts einer Gestänge-Tiefpumpe erlauben.

Die erfindungsgemäße Aufgabe wird durch ein Verfahren eingangs genannter Art gelöst, indem während einer Pumpbewegung des Gestänges durch den Bohrlochkopf ein Hub-Bereich gebildet wird, welcher von einer Kamera durch eine Bild-Sequenz erfasst wird, und folgende Verfahrensschritte ausgeführt werden:
a) Erfassen von Bildern der Bild-Sequenz mit zumindest dem Hub-Bereich des Gestänges,
b) Erkennen einer Verschmutzung im Hub-Bereich des Gestänges gegenüber einem bekannten sauberen Zustand für ein jeweiliges Bild der Bild-Sequenz,
c) Ermitteln der Lage der erkannten Verschmutzung für ein jeweiliges Bild der Bild-Sequenz mithilfe der jeweiligen Position des Gestänges,
d) Bestimmen der Veränderung der Verschmutzung an der ermittelten Lage über zumindest einen Pumpzyklus aus zumindest einem Bild der Bild-Sequenz,
e) Prüfen, ob die Veränderung der Verschmutzung einen vorbestimmten Grenzwert überschreitet, und falls zutreffend, Ausgeben einer Warnung eines Ölaustritts.

Die Erfindung mach sich die Erkenntnis zunutze, dass ein Ölaustritt am Gestänge durch die Bewegung des Gestänges an einer inhärent vorhandenen Dichtung am Bohrkopf längs der Stange verschmiert, welcher auf einfache Weise mit computerimplementierten Methoden erkannt werden kann.

Dadurch wird erreicht, dass bereits minimale, schleichende Ölaustritte und Schlieren an der Polierstange der Pumpe detektiert werden können.

Hierfür kann eine handelsübliche Farb- oder Grauwertkamera zum Einsatz kommen, während in kommerziellen Systemen in der Regel kostspielige Thermalkameras verwendet werden müssen.

Eine handelsübliche RGB- oder Grauwertkamera wird so angebracht und ausgerichtet, dass der Eintauchpunkt der Polierstange und ein möglichst großer Teil der Stange selbst erfasst wird.

Durch Verwendung eines geeigneten Objektivs soll eine Objektauflösung von etwa 1 mm/Pixel erreicht werden.

Der Bildausschnitt muss so ausgewählt werden, dass ein Teil oder die gesamte Stange im Bild sichtbar ist.

Vor der Inbetriebnahme wird die Position der Polierstange grob manuell annotiert, wie durch Einzeichnen einer viereckigen Markierung über den sichtbaren Bereich der Stange.

Durch die Anwendung der Erfindung wird erreicht, dass auch nur ein geringfügiger Ölaustritt an einer Polierstange automatisch mit einer handelsüblichen Kamera detektieren werden kann.

Ferner kann eine einzelne Detektion eines Ölaustritts in zeitlichen Bezug innerhalb einer Pump-Periode gesetzt werden.

Dies verbessert den Stand der Technik dahingehend, dass ein Ölaustritt sofort erkannt werden kann, und nicht durch Verschmutzungen aus späteren Zeitpunkten beeinträchtigt werden kann.

Daher können Fehlerkennungen und Fehlalarme reduziert werden.

Andererseits könnte eine relevante Verschmutzung gerade unter der Erde oder über dem sichtbaren Kameraausschnitt liegen.

Durch Bestimmung des exakten Zeitpunktes innerhalb einer Periode kann einerseits über die Zeit die gesamte Polierstange betrachtet werden, und andererseits irrelevante Verschmutzungen als solche erkannt werden.

Zur weiteren Verbesserung der Erkennungsrate eines Ölaustritts kann nach dem Schritt c) eine zusätzliche Plausibilitätsprüfung erfolgen, beispielsweise ob eine im Schritt b) ermittelte Verschmutzung tatsächlich von einem Ölaustritt am Gestänge stammen kann oder es sich möglicherweise um eine äußere Verschmutzung handelt, welche durch Menschen, Tiere oder andere Maschinen hervorgerufen wurde.

Die Bildsequenz kann auch Bilder aufweisen, welche zeitlich nicht unmittelbar aufeinander folgen. Mit anderen Worten können einzelne oder mehrere Bilder der Bildsequenz gelöscht werden, welche keine für eine Verschmutzung relevante Informationen enthalten, um beispielsweise Speicherplatz im Speicher einer Rechenvorrichtung zu sparen.

In einer Weiterbildung der Erfindung ist es vorgesehen, dass das Erkennen der Verschmutzung erfolgt, indem für ein jeweiliges Bild der Bild-Sequenz eine pixelweise Prüfung gegen einen vordefinierten Schwellwert oder eine Änderung des Pixels-Werts durchgeführt wird.

Dadurch wird erreicht, dass nur einer Änderung der Verschmutzungen zur Bestimmung der Verschmutzung herangezogen wird.

Nachdem Öl viskose und adhäsive Eigenschaften aufweist, haftet es an der polierten Stange, während eine Verschmutzung ohne Öl nicht anhaftet.

In einer Weiterbildung der Erfindung ist es vorgesehen, dass am Gestänge eine Referenz-Markierung angebracht ist, und das Ermitteln der Lage der erkannten Verschmutzung in Bezug auf die Lage der Referenz-Markierung erfolgt, indem die Referenz-Markierung zumindest teilweise durch Bilder der Bild-Sequenz von der Kamera erfasst wird.

Nachdem die Kamera einen festen örtlichen Bereich der Pumpe erfasst, das Gestänge durch die Pumpbewegung jedoch bewegt wird, müssen die erfassten Bildbereiche zueinander zugeordnet werden, um eine Veränderung eines Bereichs auf der Stange erfassen zu können.

Durch die Weiterbildung wird erreicht, dass die Bilder einer Bild-Sequenz zueinander auf einfache Weise zugeordnet werden können.

In einer Weiterbildung der Erfindung ist es vorgesehen, dass zu den Bildern der Bild-Sequenz jeweils Zeitstempel zum Aufnahmezeitpunkt erfasst werden, und für die Bilder der Bild-Sequenz über die Zeitstempel die Lage der erkannten Verschmutzung in Bezug auf die Lage der Referenz-Markierung ermittelt wird.

Dadurch wird auf einfache Weise eine Zuordnung der Bildbereiche in jeweiligen Bildern ermöglicht.

In einer Weiterbildung der Erfindung ist es vorgesehen, dass der Motor ein elektrischer Motor ist, und das Ermitteln der Lage der erkannten Verschmutzung in Bezug auf die Position des Gestänges erfolgt, indem während einer Pumpbewegung die Leistungsaufnahme des Motors mit einem Sensormittel erfasst wird, aus welcher die Position des Gestänges ermittelt wird.

Dadurch wird auf einfache Weise eine Zuordnung der Bildbereiche in jeweiligen Bildern ermöglicht.

In einer Weiterbildung der Erfindung ist es vorgesehen, dass beim Bestimmen der Veränderung der Verschmutzung ein Modell für die Form und/oder Textur und deren jeweilige zeitliche Änderung auf Basis maschinellen Lernens erzeugt, trainiert und angewandt wird.

Dadurch wird erreicht, dass die Art der Veränderung der detektierten Verschmutzung durch Anwendung maschinellen Lernens bestimmten Fehlerursachen zugeordnet werden, das heiß klassifiziert kann.

In einer Weiterbildung der Erfindung ist es vorgesehen, dass das Ermitteln der Lage der erkannten Verschmutzung in Bezug auf die Position des Gestänges erfolgt, indem eine Bewegung am Gestänge oder am Kinematik-Wandler durch zumindest einen Sensor erfasst wird, aus welcher die Position des Gestänges ermittelt wird.

Dadurch wird auf einfache Weise eine Zuordnung der Bildbereiche in jeweiligen Bildern ermöglicht.

Die erfindungsgemäße Aufgabe wird durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird durch ein Datenträgersignal gelöst, welches das erfindungsgemäße Computerprogramm überträgt.

Die erfindungsgemäße Aufgabe wird auch durch eine Analysevorrichtung mit einem Speicher eingangs genannter Art gelöst, welche dazu eingerichtet ist, während einer Pumpbewegung des Gestänges durch den Bohrlochkopf ein Hub-Bereich vorliegt, welcher von einer Kamera durch eine Bild-Sequenz erfasst wird, und die Analysevorrichtung dazu eingerichtet ist, die erfindungsgemäßen Verfahrensschritte auszuführen.

Die erfindungsgemäße Aufgabe wird auch durch ein Pumpsystem eingangs genannter Art gelöst, wobei die Pumpe einen Pump-Kopf aufweist, welcher über ein Gestänge mit einem Kinematik-Wandler verbunden ist, und der Kinematik-Wandler im Betrieb von einem Motor angetrieben wird, und das Gestänge in einen im Boden befindlichen Bohrlochkopf eintaucht, wobei während einer Pumpbewegung des Gestänges durch den Bohrlochkopf ein Hub-Bereich vorliegt, welcher von einer Kamera durch eine Bild-Sequenz erfasst wird, und eine erfindungsgemäße Analyse-vorrichtung dazu eingerichtet ist, die Schritte des erfindungsgemäßen Verfahrens auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: eine schematische Darstellung eines Pumpsystems mit einer Gestänge-Tiefpumpe,
- Fig. 2: eine schematische Darstellung eines Pumpsystems mit einer Gestänge-Tiefpumpe mit einer Kamera zur erfindungsgemäßen Erkennung eines Ölaustritts,
- Fig. 3: ein Beispiel für ein erfasstes Bild eines verschmutzten Gestänges,
- Fig. 4: ein vergrößerter Bildausschnitt der Fig. 3,
- Fig. 5: eine binarisierte Darstellung der Fig. 4,
- Fig. 6: ein Beispiel für ein verschmutztes Gestänge in einer ersten Position,
- Fig. 7: ein Beispiel für ein verschmutztes Gestänge in einer zweiten Position,
- Fig. 8: ein Beispiel für ein verschmutztes Gestänge in einer dritten Position,
- Fig. 9: ein Ausführungsbeispiel für Flussdiagramm des erfindungsgemäßen Verfahrens.

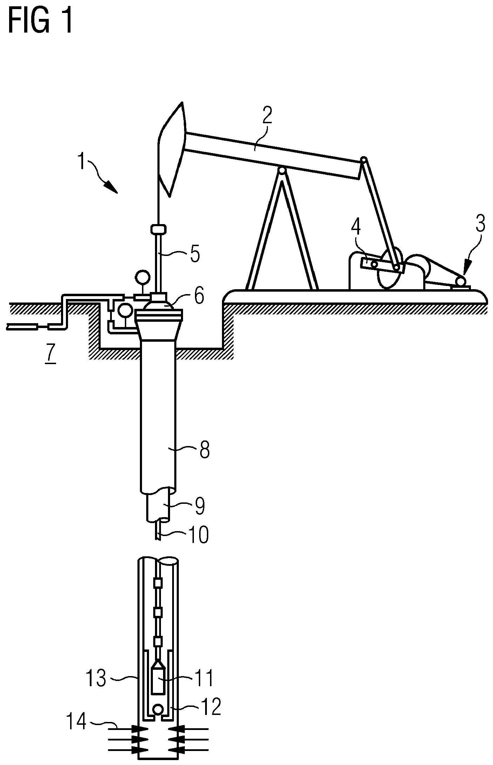

Fig. 1 zeigt ein Ausführungsbeispiel eines Pumpsystems 20 mit einer Gestänge-Tiefpumpe 1 vom Typ einer Sucker-Rod-Pumpe.

Das Pumpsystem umfasst einen Pump-Kopf, welcher über ein Gestänge 5, 10 mit einem Kinematik-Wandler verbunden ist. Das Gestänge 5, 10 bildet eine sogenannte "Stabschnur" und verläuft durch einen Bohrlochkopf 6, mit welchen eine Durchflussleitung 7 zur Ableitung eines geförderten Mediums 14 verbunden ist.

Der obere Teil 5 des Gestänges ist durch eine polierte Stange gebildet, welche durch eine entsprechende Dichtung durch einen Bohrlochkopf 6 hindurch verläuft.

Der untere Teil 10 des Gestänges ist meist unterirdisch gelegen.

An den Bohrlochkopf 6 grenzt ein Mantel 8 an, in welchem eine Röhre 9 verläuft, die das Gestänge 5 bzw. 10 führt.

Der Bohrlochkopf 6 umgreift mittels einer Dichtung die polierte Stange 5, sodass im normalen Betriebszustand kein Öl an der Stange haftet.

Am unteren Ende des Gestänges 10 ist der Pump-Kopf befestigt, der einen Kolben 11 in einem Lauf 12 beinhaltet. Eine Bewegung des Kolbens 11 führt zu einem Abpumpen des Fördermediums 14.

Der Mantel 8 ist in einem Bohrloch 13 gebildet.

Der Kinematik-Wandler wird beispielsweise von einer Antriebsmaschine in Form eines elektrischen Motors 3 über ein Untersetzungsgetriebe 4 angetrieben. Der Kinematik-Wandler kann zusätzlich einen hydraulischen Kraftverstärker umfassen.

Die mechanische Anbindung des Kinematik-Wandler erfolgt in diesem Beispiel über einen Laufbalken 2, kann je nach verwendetem Pumpentyp aber variieren.

Dem Fachmann sind derartige Kinematik-Wandler geläufig, ebenso deren Beschreibung in Form von "Eigenschaften eines Kinematik-Wandlers" durch die Transformations-Funktion von mechanischen Bewegungen und Kräften.

Der Kinematik-Wandler konvertiert eine Drehbewegung des Motors 3 in eine Linearbewegung des Gestänges 5, 10.

Die Eigenschaften des Kinematik-Wandler können beispielsweise über Hebelwirkungen und Übersetzungen, sowie über die elektrische Antriebsleistung und bewegte Massen beschrieben werden. Dabei ist zu beachten, dass die Position einer Schwungmasse entlang einer Drehbewegung und die korrespondierende Krafteinwirkung am Gestänge 10 in einem zeitlichen Zusammenhang steht, welche als Bezugsphasenwinkel bezeichnet wird. Für eine jeweilige Pumpenanordnung kann ein Bezugsphasenwinkel unter Anwendung der Kinematik-Prinzipien der Mechanik bestimmt werden, wie dem Fachmann bekannt.

Der Motor kann ein elektrischer Motor sein, was das Ermitteln der Lage der erkannten Verschmutzung in Bezug auf die Position des Gestänges 5 erheblich vereinfacht, denn dadurch kann während einer Pumpbewegung die Leistungsaufnahme des Motors 3 mit einem Sensormittel erfasst werden, aus welcher die Position des Gestänges 5 ermittelt wird.

Dazu kann optional ein Erfassungsmittel vorgesehen sein, das dazu eingerichtet ist, die Stromaufnahme und die Betriebsspannung der einzelnen Phasen des elektrischen Motors 3 während dessen Betrieb zu erfassen.

Dies kann beispielsweise durch ein Amperemeter beziehungsweise Voltmeter erfolgen, welches insbesondere zeitlich hochauflösend diskrete Messpunkte mit Strom- beziehungsweise Spannungswerten erfasst.

Durch die erfassten Strom- und Betriebsspannungswerte kann die effektive Leistungsaufnahme und die Schein-Leistungsaufnahme bestimmt werden, woraus auf die aktuelle Position des Gestänges 5, 10 geschlossen werden kann.

Es ist dem Fachmann bekannt, wie ein Bezugsphasenwinkel für den Kinematik-Wandler mithilfe der Eigenschaften des Kinematik-Wandlers und der Leistungsaufnahme des Motors 3, welcher den Zusammenhang zwischen dem Maximum der Leistungsaufnahme und dem Maximum der auf das Gestänge der Tiefpumpe 1 wirkenden Kraft beschreibt, ermittelt werden kann.

Es ist dem Fachmann auch bekannt, wie ein Drehmoment-Verlauf aus der Leistungsaufnahme des Motors 3 mithilfe der Eigenschaften des Kinematik-Wandlers ermittelt werden kann.

Alternativ kann die Ermittlung der Position des Gestänges 5 erfolgen, indem eine Bewegung am Gestänge 5, 10 oder am Kinematik-Wandler durch zumindest einen Sensor, wie einen Inklinationssensor, einen Bewegungssensor, einen Beschleunigungssensor oder einen magnetischen Kontaktsensor erfasst wird.

Das erfindungsgemäße Verfahren kann als Computerprogramm implementiert werden, das Befehle umfasst, welche bei deren Ausführung durch einen Computer diesen veranlassen, das erfindungsgemäße Verfahren auszuführen.

Ferner kann das erfindungsgemäße Verfahren als elektronisch lesbarer Datenträger mit darauf gespeicherten lesbaren Steuerinformationen verfügbar sein, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Das erfindungsgemäße Verfahren kann auch als Datenträgersignal verfügbar sein, das das erfindungsgemäße Computerprogramm überträgt.

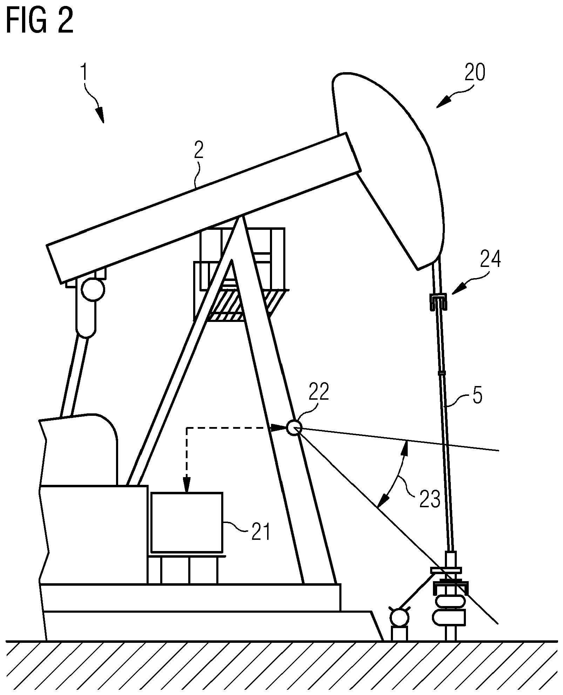

Fig. 2 zeigt ein Ausführungsbeispiel eines Pumpsystems 20 mit einer Gestänge-Tiefpumpe 1, sowie einer Analysevorrichtung 21 mit einem Prozessor, einem Speicher und einer Kamera 22, welche das Gestänge 5 der Pumpe 1 in Form eines digitalen Bildes erfasst.

Die Erfindung kann als computer-implementiertes Verfahren zur Erkennung eines Ölaustritts bei einer Gestänge-Tiefpumpe 1 ausgeführt werden.

Dabei umfasst die Pumpe 1, wie in der vorhergehenden Figur bereits ausgeführt, den Pump-Kopf, welcher über das Gestänge 5, 10 mit dem Kinematik-Wandler verbunden ist.

Der Kinematik-Wandler wird im Betrieb von dem Motor 3 angetrieben.

Das Gestänge 5, 10 taucht in den im Boden befindlichen Bohrlochkopf 6 ein.

Während einer Pumpbewegung des Gestänges 5 wird durch den Bohrlochkopf 6 ein Hub-Bereich gebildet, welcher von einer Kamera 22 durch eine Bild-Sequenz erfasst wird.

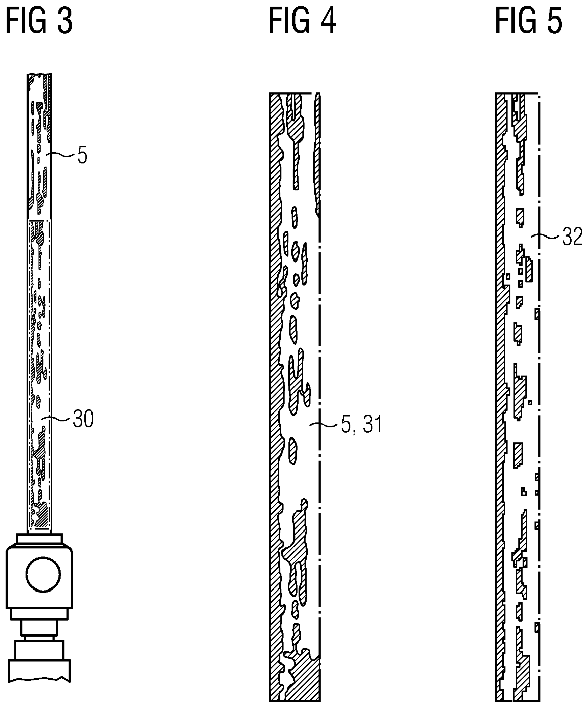

Fig. 3 zeigt ein Beispiel für ein erfasstes Bild mit der polierten, öl-verschmutzten Stange des Gestänges 5.

Es kann ein Referenz-Bildausschnitt 30 für die weitere Analyse extrahiert werden, wie in Fig. 4 dargestellt.

Ein Erfassungswinkel 23 wird durch die Kamera 22 und deren Optik gebildet, welcher ein Bild in einem Bereich erfasst, in welchem ein Teil oder die gesamte Stange 5im Bild sichtbar ist.

Um die Position des Gestänges 5 einfach zu erfassen, ist in diesem Beispiel am Gestänge 5 eine Referenz-Markierung 24 angebracht.

Das Ermitteln der Lage der erkannten Verschmutzung in Bezug auf die Lage der Referenz-Markierung 24 erfolgt, indem die Referenz-Markierung 24 zumindest teilweise durch Bilder der Bild-Sequenz von der Kamera 22 erfasst wird.

Falls nicht für jedes Bild eine entsprechende Markierung auf der Stange 5 erfasst werden kann, kann zu den Bildern der Bild-Sequenz jeweils ein Zeitstempel zum Aufnahmezeitpunkt erfasst werden.

Für die Bilder der Bild-Sequenz kann somit über die Zeitstempel die Lage der erkannten Verschmutzung in Bezug auf die Lage der Referenz-Markierung 24 ermittelt werden.

Vor einer Inbetriebnahme kann die Position der Polierstange 5 auch nur manuell annotiert werden, wie durch Einzeichnen eines Vierecks über den sichtbaren Bereich der Stange.

Nach der Erfassung eines Bildes durch die Kamera 22 erfolgt eine Binarisierung des Bildes, wie in Fig. 5 dargestellt, beispielsweise durch Anwendung eines vorbestimmten Schwellwertes für den Wert jedes Pixels.

Verschmutzungen der Stange können nun erkannt werden, beispielsweise indem für ein jeweiliges Bild der Bild-Sequenz eine pixelweise Prüfung gegen einen vordefinierten Schwellwert oder eine Änderung des Pixels-Werts durchgeführt wird.

Es wird nun die Veränderung einer Verschmutzung über die Zeit beobachtet.

Beim Bestimmen der Veränderung der Verschmutzung kann optional ein Modell für die Form und/oder Textur und deren jeweilige zeitliche Änderung auf Basis maschinellen Lernens erzeugt, trainiert und angewandt werden.

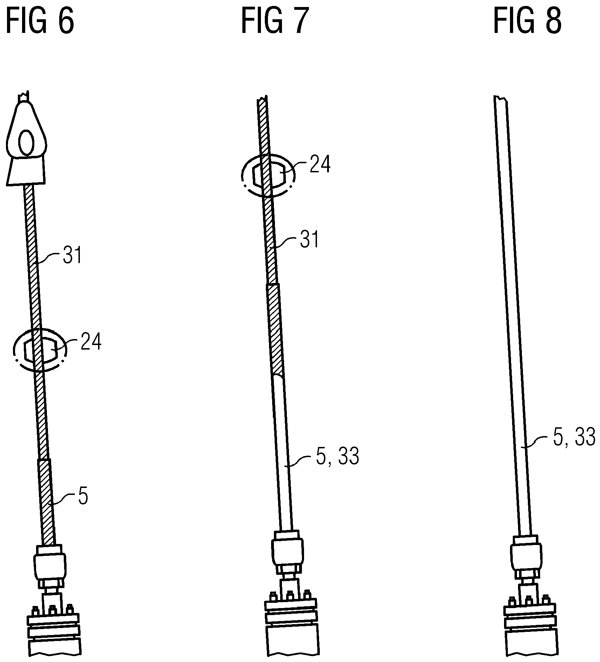

Fig. 6 zeigt ein Beispiel für ein verschmutztes Gestänge in einer ersten Position, in welcher das Gestänge 5 tief in den Bohrkopf 6 eintaucht.

An der polierten Stange 5 ist die Referenz-Markierung 24 in Form einer Rohrschelle befestigt.

Eine sichtbare Verschmutzung oberhalb der Polierstangen-Traverse, das heißt der Markierung 24 ist nicht relevant, da sie auch im Normalzustand vorhanden ist und als Bezugsinformation verwendet wird.

Fig. 7 zeigt die Anordnung der vorhergehenden Figur in einer zweiten Position, in welcher das Gestänge 5 zum Teil aus dem Bohrkopf 6 herausgezogen ist und ein sauberer Bereich 33 des polierten Stange 5 erkennbar ist, wie es für den ordnungsgemäßen Betrieb der Pumpe 1 vorgesehen ist.

Fig. 8 zeigt die Anordnung der vorhergehenden Figur in einer dritten Position, in welcher das Gestänge 5 zum Teil aus dem Bohrkopf 6 ganz herausgezogen ist und der saubere Bereich 33 des polierten Stange 5 erkennbar ist, wie es für den ordnungsgemäßen Betrieb der Pumpe 1 vorgesehen ist.

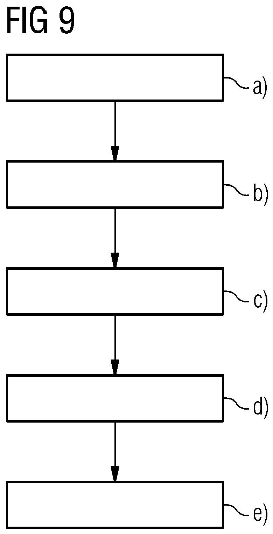

Fig. 9 zeigt ein Ausführungsbeispiel für Flussdiagramm des erfindungsgemäßen Verfahrens, in welchem folgende Verfahrensschritte von der Analysevorrichtung 21 ausgeführt werden:
a) Erfassen von Bildern der Bild-Sequenz mit zumindest dem Hub-Bereich des Gestänges 5,
b) Erkennen einer Verschmutzung im Hub-Bereich des Gestänges 5 gegenüber einem bekannten sauberen Zustand für ein jeweiliges Bild der Bild-Sequenz,
c) Ermitteln der Lage der erkannten Verschmutzung für ein jeweiliges Bild der Bild-Sequenz mithilfe der jeweiligen Position des Gestänges 5,
d) Bestimmen der Veränderung der Verschmutzung an der ermittelten Lage über zumindest einen Pumpzyklus aus den Bildern der Bild-Sequenz,
e) Prüfen, ob die Veränderung der Verschmutzung einen vorbestimmten Grenzwert überschreitet, und falls zutreffend, Ausgeben einer Warnung eines Ölaustritts.

### Bezugszeichen:

- 1: Gestänge-Tiefpumpe
- 2: Laufbalken
- 3: Antriebsmaschine, Motor
- 4: Untersetzungsgetriebe
- 5: polierte Stange
- 6: Bohrlochkopf
- 7: Durchflussleitung
- 8: Mantel
- 9: Röhre
- 10: Stabschnur
- 11: Kolben
- 12: Lauf
- 13: Bohrloch
- 14: Fördermedium
- 20: Pumpsystem
- 21: Analyse-Vorrichtung
- 22: Kamera
- 23: Winkel
- 24: Polierstangen-Traverse, Markierung
- 30: Bildausschnitt
- 31: Öl-verschmutzter Bereich der Stange
- 32: binarisierter Bildausschnitt
- 33: sauberer Bereich der Stange

## Patentansprüche

1. Computer-implementiertes Verfahren zur Erkennung eines Ölaustritts bei einer Gestänge-Tiefpumpe (1),
wobei die Pumpe (1) einen Pump-Kopf aufweist, welcher über ein Gestänge (5, 10) mit einem Kinematik-Wandler verbunden ist, und der Kinematik-Wandler im Betrieb von einem Motor (3) angetrieben wird, und das Gestänge (5, 10) in einen im Boden befindlichen Bohrlochkopf (6) eintaucht,
**dadurch gekennzeichnet, dass** während einer Pumpbewegung des Gestänges (5) durch den Bohrlochkopf (6) ein Hub-Bereich gebildet wird, welcher von einer Kamera (22) durch eine Bild-Sequenz erfasst wird, und folgende Verfahrensschritte ausgeführt werden:
a) Erfassen von Bildern der Bild-Sequenz mit zumindest dem Hub-Bereich des Gestänges (5),
b) Erkennen einer Verschmutzung im Hub-Bereich des Gestänges (5) gegenüber einem bekannten sauberen Zustand für ein jeweiliges Bild der Bild-Sequenz,
c) Ermitteln der Lage der erkannten Verschmutzung für ein jeweiliges Bild der Bild-Sequenz mithilfe der jeweiligen Position des Gestänges (5),
d) Bestimmen der Veränderung der Verschmutzung an der ermittelten Lage über zumindest einen Pumpzyklus aus den Bildern der Bild-Sequenz,
e) Prüfen, ob die Veränderung der Verschmutzung einen vorbestimmten Grenzwert überschreitet, und falls zutreffend, Ausgeben einer Warnung eines Ölaustritts.

2. Verfahren nach dem vorhergehenden Anspruch,
wobei das Erkennen der Verschmutzung erfolgt, indem für ein jeweiliges Bild der Bild-Sequenz eine pixelweise Prüfung gegen einen vordefinierten Schwellwert oder eine Änderung des Pixels-Werts durchgeführt wird.

3. Verfahren nach einem der vorhergehenden Ansprüche, wobei am Gestänge (5) eine Referenz-Markierung (24) angebracht ist, und das Ermitteln der Lage der erkannten Verschmutzung in Bezug auf die Lage der Referenz-Markierung (24) erfolgt, indem die Referenz-Markierung (24) zumindest teilweise durch Bilder der Bild-Sequenz von der Kamera (22) erfasst wird.

4. Verfahren nach dem vorhergehenden Anspruch,
wobei zu den Bildern der Bild-Sequenz jeweils Zeitstempel zum Aufnahmezeitpunkt erfasst werden, und für die Bilder der Bild-Sequenz über die Zeitstempel die Lage der erkannten Verschmutzung in Bezug auf die Lage der Referenz-Markierung (24) ermittelt wird.

5. Verfahren nach einem der vorhergehenden Ansprüche, wobei der Motor (3) ein elektrischer Motor ist, und das Ermitteln der Lage der erkannten Verschmutzung in Bezug auf die Position des Gestänges (5) erfolgt, indem während einer Pumpbewegung die Leistungsaufnahme des Motors (3) mit einem Sensormittel erfasst wird, aus welcher die Position des Gestänges (5) ermittelt wird.

6. Verfahren nach einem der vorhergehenden Ansprüche, wobei beim Bestimmen der Veränderung der Verschmutzung ein Modell für die Form und/oder Textur und deren jeweilige zeitliche Änderung auf Basis maschinellen Lernens erzeugt, trainiert und angewandt wird.

7. Verfahren nach einem der vorhergehenden Ansprüche, wobei das Ermitteln der Lage der erkannten Verschmutzung in Bezug auf die Position des Gestänges (5) erfolgt, indem eine Bewegung am Gestänge (5, 10) oder am Kinematik-Wandler durch zumindest einen Sensor erfasst wird, aus welcher die Position des Gestänges (5) ermittelt wird.

8. Computerprogramm,
umfassend Befehle, welche bei deren Ausführung durch einen Computer diesen veranlassen, das Verfahren nach einem der vorhergehenden Ansprüche auszuführen.

9. Elektronisch lesbarer Datenträger mit darauf gespeicherten lesbaren Steuerinformationen,
welche zumindest ein Computerprogramm nach dem vorhergehenden Anspruch umfassen und derart ausgestaltet sind, dass sie bei Verwendung des Datenträgers in einer Recheneinrichtung ein Verfahren nach einem der Ansprüche 1 bis 7 durchführen.

10. Datenträgersignal,
welches das Computerprogramm nach Anspruch 8 überträgt.

11. Analysevorrichtung (21) zur Erkennung eines Ölaustritts bei einer Gestänge-Tiefpumpe (1),
wobei die Pumpe (1) einen Pump-Kopf aufweist, welcher über ein Gestänge (5, 10) mit einem Kinematik-Wandler verbunden ist, und der Kinematik-Wandler im Betrieb von einem Motor (3) angetrieben wird, und das Gestänge (5, 10) in einen im Boden befindlichen Bohrlochkopf (6) eintaucht,
**dadurch gekennzeichnet, dass** während einer Pumpbewegung des Gestänges (5) durch den Bohrlochkopf (6) ein Hub-Bereich vorliegt, welcher von einer Kamera (22) durch eine Bild-Sequenz erfasst wird, und die Analysevorrichtung dazu eingerichtet ist, die Verfahrensschritte nach einem der Ansprüche 1 bis 7 auszuführen.

12. Pumpsystem (20) zur Erkennung eines Ölaustritts bei einer Gestänge-Tiefpumpe (1), umfassend eine Pumpe (1) mit einem Pump-Kopf, welcher über ein Gestänge (5, 10) mit einem Kinematik-Wandler verbunden ist, und der Kinematik-Wandler im Betrieb von einem Motor (3) angetrieben wird, und das Gestänge (5, 10) in einen im Boden befindlichen Bohrlochkopf (6) eintaucht, wobei während einer Pumpbewegung des Gestänges (5) durch den Bohrlochkopf (6) ein Hub-Bereich vorliegt, welcher von einer Kamera (22) durch eine Bild-Sequenz erfasst wird, und eine Analysevorrichtung gemäß dem vorhergehenden Anspruch dazu eingerichtet ist, die Schritte des Verfahrens nach einem der Ansprüche 1 bis 7 auszuführen.
